# EUROPÄISCHE PATENTSCHRIFT

(11) **EP 2 513 526 B1**
(45) Veröffentlichungstag und Bekanntmachung des Hinweises auf die Patenterteilung: **08.01.2014**
(21) Anmeldenummer: 10773296.8
(22) Anmeldetag: 28.10.2010
(51) Int. Cl.: F16J 9/20, F16J 15/16, F16J 15/44, F16J 15/56, B23P 15/06

(54) **KOLBEN MIT KOLBENRINGEN UND STÜTZRINGEN**
PISTON HAVING PISTON RINGS AND SUPPORT RINGS
PISTON AVEC SEGMENTS DE PISTON ET BAGUES D'APPUI

(30) Priorität: 14.12.2009 AT 19702009
(43) Veröffentlichungstag der Anmeldung: 24.10.2012
(73) Patentinhaber: Hoerbiger Kompressortechnik Holding GmbH, 1220 Wien (AT)
(72) Erfinder: HOLD, Christian, A-2102 Bisamberg (AT); LAGLER, Martin, A-1220 Wien (AT); JANDL, Alexander, A-3495 Rohrendorf (AT)
(74) Vertreter: Weiss, Christian
(86) Internationale Anmeldenummer: PCT/EP2010/066378
(87) Internationale Veröffentlichungsnummer: WO 2011/072941

(56) Entgegenhaltungen:
- AT-A1- 507 055
- JP-A- 2003 003 960
- US-A- 1 965 294
- US-A- 4 556 223

## Beschreibung

Die gegenständliche Erfindung betrifft einen Kolben mit einem Kolbenkörper und einer Anzahl von Kolbenringen und Stützringen, wobei ein Kolbenring und ein Stützring in einer am Kolbenkörper vorgesehenen Umfangsnut angeordnet sind und sich der Kolbenring am Stützring abstützt und ein Verfahren zur Herstellung eines solchen Kolbenkörpers bzw. Kolbens.

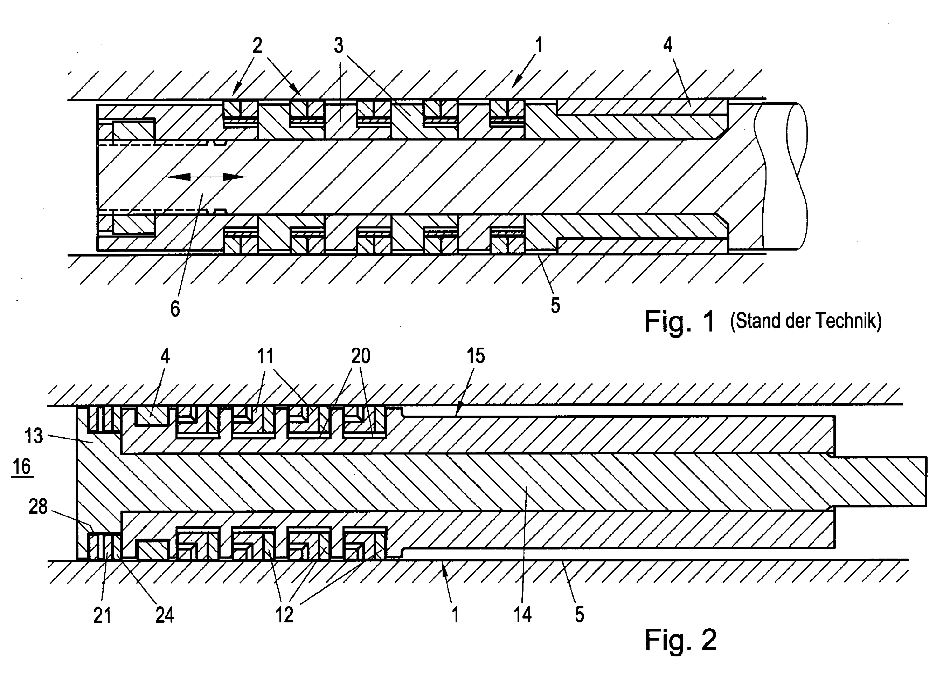

In einem herkömmlichen gebauten Kolben 1 (wie in Fig. 1 gezeigt), z.B. für einen Kolbenkompressor, werden die Kolbenringe 2 in einer starren L-förmigen Scheibe 3 aufgenommen, wobei sich die Kolbenringe 2 an den radialen Schenkeln der L-förmigen Scheiben 3 abstützen. Die L-förmigen Scheiben 3 werden hier direkt auf einer Kolbenstange 6 angeordnet und fixiert. Der Kolben 1 wird im Zylinder 5 durch einen Tragring 4 geführt, womit ein Anlaufen des Kolbens 1 an den Zylinder 5 verhindert wird. Mit zunehmendem Tragringverschleiß erhöht sich jedoch die Beweglichkeit des Kolbens 1 quer zur Hubbewegung (durch Doppelpfeil angedeutet). Bei einem solchen Kolben 1 ist es daher notwendig, dass das Spiel zwischen Kolben 1 (bzw. den L-förmigen Scheiben 3) und Zylinder 5 möglichst groß ist, um einen maximalen Tragringverschleiß erreichen zu können. Aufgrund dieser Notwendigkeit entsteht jedoch zwangsweise ein großes Spiel zwischen Kolben 1 und Zylinder 5, wodurch aber die Kolbenringe 2, die in der Regel aus einem Kunststoff, wie z.B. PTFE, gefertigt sind, in diesen Spalt zwischen L-förmigen Scheiben 3 und Zylinder 5 hineinextrudieren können. Dieses Spiel sollte daher aber möglichst klein sein, damit die Kolbenringe 2 (speziell bei hohen Drücken) nicht in den Spalt extrudieren. Um diese widersprüchlichen Anforderungen mit einem solchen bekannten Kolben 1 zu erfüllen, kann in die Kolbenringnut ein zusätzlicher Backup Ring angeordnet werden, was aber die Länge des Kolbens vergrößert.

Der Kolben nach der EP 541 482 A1 löst dieses Problem durch nachstellbare, geschlitzte Kolbenringe. Die Kolbenringe sind dazu in einem L-förmigen Kammerring und radial innen beabstandet von der Begrenzungsfläche des Kammerringes angeordnet, wobei die Kolbenringe durch benachbarte Kammerringe eingeklemmt werden. In den dadurch entstehenden Ringraum wird der Arbeitsdruck geleitet, wodurch die Kolbenringe gegen die Lauffläche des Zylinders gepresst werden. Eine Stirnseite des Kolbenringes ist, so wie der radiale Schenkel des L-förmigen Kammerringes, abgeschrägt, wobei in der Ausgangslage die beiden parallelen schrägen Fläche beabstandet voneinander angeordnet sind. Mit zunehmendem Verschleiß der Kolbenringe nähern sich die beiden schrägen Flächen zusehends an, bis sie aneinander liegen, womit die Verschleißgrenze erreicht ist. Eine axiale Beweglichkeit des Kolbens wird dadurch unterbunden, dass der Kolben durch die Kolbenringe im Zylinder geführt ist. Das Spiel zwischen Kolben und Zylinder, und in Folge die Extrusionsgefahr, kann dadurch aber verringert werden, da durch die nachstellbaren Kolbenringe verhindert wird, dass der Kolben an den Zylinder anläuft. Ein solcher Kolben ist aber aufgrund der schrägen Flächen und der notwendigen Zuführung des Gasdruckes in den Ringraum fertigungstechnisch aufwendig. Außerdem ergibt sich durch die notwendige axiale Klemmung der Kolbenringe durch benachbarte Kammerringe ein Doppelpassungsproblem, was ebenfalls zu fertigungstechnischen Schwierigkeiten führt. Zudem kann das dazu führen, dass die Kolbenringe mit unterschiedlichen Andrückkräften gegen den Zylinder gedrückt werden, was wiederum zu unerwünschten unterschiedlichen Verschleißraten der Kolbenringe führen kann.

US 4, 556, 223 offenbart auch einen Kolben mit einem Kolbenkörper, Kolbenringen und Stützringen gemäß dem Oberbegriff des Anspruchs 1.

Ein gebauter Kolben hat darüber hinaus auch das Problem, dass der Kolben aus sehr vielen Einzelteilen besteht, was die Fertigung und die Montage eines solchen Kolbens erschwert.

Es ist daher eine Aufgabe der gegenständlichen Erfindung einen Kolben bzw. Kolbenkörper und ein Verfahren zur Fertigung eines solchen anzugeben, der die beiden widersprüchlichen Anforderungen, großes Spiel zwischen Kolben und Zylinder einerseits und geringe Extrusion des Kolbenringes andererseits, löst und einfach und kompakt aufgebaut ist, sowie mit wenigen Einzelteilen auskommt.

Diese Aufgabe wird für den Kolben erfindungsgemäß dadurch gelöst, dass die axiale Breite der Umfangsnut größer ist, als die axiale Gesamtbreite des Stützringes und des Kolbenringes und der Stützring radial innen radial beabstandet vom Kolbenkörper angeordnet ist und dass der Stützring ein ungeschnittener Ring ist, der aus dem Kolbenkörper herausgedreht ist. Das erfindungsgemäße Verfahren ist dadurch gekennzeichnet, dass der Kolbenkörper mit einem umfangsnutförmigen Einschnitt gefertigt wird, anschließend umfangsnutförmige Einschnitt auf die gewünschte Breite der Umfangsnut hinterdreht wird und hinterdrehte Teil des umfangsnutförmigen Einschnittes zur Ausbildung des Stützringes abgetrennt wird. Damit wird durch die erfindungsgemäße Anordnung einerseits erreicht, dass ein Stützring bei einer Bewegung des Kolbens quer zur Hubbewegung mit dem Kolben nicht mitbewegt wird, sondern sich lediglich der Kolbenkörper relativ zum Stützring bewegt. Ein Stützring wird daher durch die Kolbenbewegung nicht gegen die Lauffläche des Zylinders gedrückt, womit das radiale Spiel zwischen Stützring und Lauffläche erheblich verkleinert werden kann. Andererseits kann dadurch, dass der Stützring aus dem Kolbenkörper herausgedreht wird, die Zahl der benötigten Einzelteile drastisch reduziert werden, da der Kolbenkörper mit den Stützringen als ein Teil gefertigt werden kann. Es werden daher nur mehr Kolbenringe und gegebenenfalls weitere Ringe benötigt, um den Kolben zu komplettieren. Nach dem Fertigen des Kolbenkörpers mit Stützring wird vorteilhaft nur mehr ein Kolbenring in die Umfangnut eingesetzt, um den Kolben zu komplettieren. Der so gefertigte Kolben bzw. Kolbenkörper kann dann, wie hinlänglich bekannt, auf einem Kolbenmittelteil angeordnet werden und gegebenenfalls darauf mit einem Kolbenendteil befestigt werden.

Die gegenständliche Erfindung wird nachfolgend anhand der schematischen, beispielhaften, nicht einschränkenden und vorteilhafte Ausgestaltungen zeigenden Figuren 1 bis 7 beschrieben. Dabei zeigt
Fig. 1 einen Kolben nach dem Stand der Technik,
Fig. 2 einen erfindungsgemäßen Kolben,
Fig. 3 ein Detail eines erfindungsgemäßen Kolbens,
Fig. 4 bis 6 Ausgestaltungen der im Kolben verwendeten Ringe,
Fig. 7 und 8 eine schematische Darstellung der Fertigung eines Kolbenkörpers eines erfindungsgemäßen Kolbens.

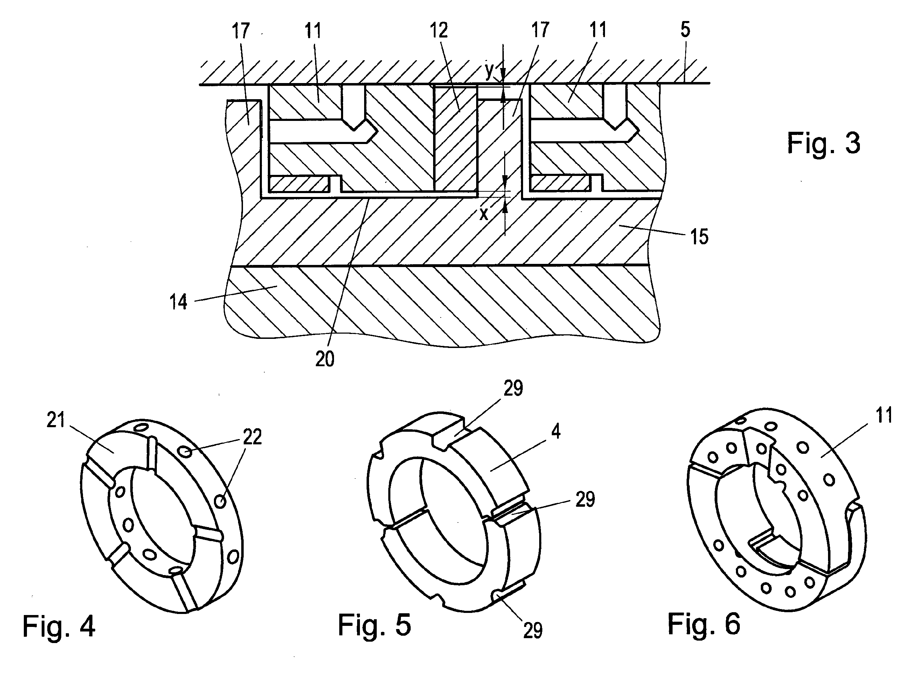

Eine vorteilhafte Ausgestaltung eines erfindungsgemäßen Kolbens wird nachfolgend unter Bezugnahme auf die Figuren 2 und 3 beschrieben. Der Kolben 1 besteht aus einem einteiligen Kolbenkörper 15, hier in Form eines hohlzylindrischen Körpers. Der Kolbenkörper 15 ist hier auf einem Kolbenmittelteil 14 angeordnet, der im gezeigten Ausführungsbeispiel auch gleichzeitig Kolbenendteil 13 ist. Es ist aber selbstverständlich bekanntermaßen auch denkbar, dass der Kolbendteil 13 als eigenständiger Teil ausgeführt ist, der am Kolbenmittelteil 14 z.B. aufgeschraubt wird. Ein axiales Ende des Kolbens 1 kann, je nach Bauart der Maschine, in der der Kolben 1 eingesetzt wird, entweder mit einem Pleuel oder einer Kolbenstange verbunden sein, wie hinlänglich bekannt ist. Im Falle einer Kolbenstange muss der Kolben 1 nicht fest mit der Kolbenstange verbunden sein (z.B. über ein einfaches Gewinde), sondern kann an der Kolbenstange auch nur lose aufliegen, da der wirkende Druck im Kompressionsraum 16 dafür sorgt, dass der Kolben 1 mit der Kolbenstange in Kontakt bleibt und damit mitbewegt wird. Es wäre jedoch auch möglich den Kolbenmittelteil 14 aus der Kolbenstange zu fertigen und einen Kolbenendteil 13 zu verwenden, um den Kolbenkörper 15 auf die Kolbenstange, hier dann gleichzeitig der Kolbenmittelteil 14, zu befestigen.

Am Kolbenkörper 15 ist eine Anzahl von Kolbenringen 11 angeordnet. Die Kolbenringe 11 können grundsätzlich beliebig ausgeführt sein. Bevorzugt werden nachstellende Kolbenringe 11 eingesetzt, die bei fortschreitendem Verschleiß, z.B. durch den wirkenden Druck, immer radial nach außen gegen den Zylinder 5 gedrückt werden. Eine mögliche Ausführung solcher Kolbenringe 11 kann z.B. der AT 505 549 B entnommen werden.

Am Kolbenkörper 15 ist eine Umfangsnut 20 vorgesehen, in der ein Kolbenring 11 und ein Stützring 12 angeordnet werden. Die Breite der Umfangsnut 20 ist etwas größer, als die Gesamtbreite aus der Breite des Stützringes 12 und der Breite des Kolbenringes 11; damit der Stützring 12 und der Kolbenring 11 in der Umfangsnut 20 mit einem axialen Spiel angeordnet ist und axial nicht eingeklemmt werden und vor allem der Kolbenkörper 15 relativ zum Stützring 12 ungehindert bewegbar bleibt. Der freien relativen Beweglichkeit des Kolbenkörpers 15 wirken nur aufgrund der anstehenden Drücke entstehende Reibungskräfte zwischen Stützring 12 und Umfangsnut 20 entgegen. Bei einer Bewegung des Kolbens 1 quer zur Hubrichtung wird somit nur der Kolbenkörper 15 bewegt, die Stützringe 12, werden dabei nicht mitbewegt. Damit liegen die Stützringe 12 schlimmstenfalls mit ihrer eigenen sehr geringen Gewichtskraft an der Zylinderwand an. Es werden jedoch keine Kräfte vom Kolbenkörper 15 auf die Stützringe 12 übertragen. Der Stützring 12 stützt sich am Kolbenkörper 15 an einem Umfangssteg 17 ab, der zwischen zwei benachbarten Umfangsnuten 20 entsteht bzw. stützt sich der letzte Stützring 12 am Kolbenkörper 15 selbst ab.

Der Stützring 12 ist als massiver ungeschnittener Ring ausgeführt. Um diesen in die Umfangsnut 20 des einteiligen Kolbenkörpers 15 zu bekommen, wird der Stützring 12 bei der Herstellung des Kolbenkörpers 15 aus dem Kolbenkörper herausgedreht, wie weiter unten noch ausführlich beschrieben wird.

Bei einer Bewegung des Kolbens 1 quer zur Hubbewegung kann sich der Kolbenkörper 15 durch das radiale Spiel X zwischen Stützring 12 und dem Grund der Umfangsnut 20 in radialer Richtung relativ zum Stützring 12 bewegen, ohne das der Stützring 12 mitbewegt wird. Ein Stützring 12 kann daher mit sehr geringem Spiel Y zwischen Zylinder 5 und äußerer Umfangsfläche des Stützringes 12 eingebaut werden, da keine Gefahr besteht, dass der Stützring 12 durch eine solche Querbewegung an den Zylinder 5 mit erhöhter Kraft angedrückt wird. Mit einer erfindungsgemäßen Anordnung kann das Spiel Y ohne Probleme auf 0,1mm verkleinert werden. Eine natürliche Grenze des Spiels Y stellt dabei die Wärmeausdehnung des Stützringes 12 dar, die natürlich nicht dazu führen darf, dass der Stützring 12 radial im Zylinder 5 eingeklemmt wird. Durch das mögliche geringe Spiel Y kann aber auch eine Extrusion des Kolbenringes 11 in den Spalt zwischen Stützring 12 und Zylinder 5 praktisch unterbunden werden. Die Kolbenringe 11 können radial ebenfalls beabstandet vom Kolbenkörper 15 angeordnet sein, z.B. bei Verwendung von Kolbenringen gemäß der AT 505 549 B, sodass zwischen Kolbenringen 11 und Kolbenkörper 15 ebenfalls ein radiales Spiel entsteht, das mit zunehmenden Kolbenringverschleiß größer wird. In den dadurch entstehenden Ringraum steht hier der wirkende Druck an, der den Kolbenring 11 nach außen gegen den Zylinder 5 drückt. Eine allfällige Querbewegung des Kolbenkörpers 15 beeinflusst die Kolbenringe 11 daher nicht.

In einer vorteilhaften Ausgestaltung eines erfindungsgemäßen Kolbens 1 ist am dem Kompressionsraum 16 zugewandten Ende des Kolbens 1 ein ungeschnittener Ring 21 angeordnet, um die dynamische Druckkomponente des Arbeitsdruckes abzudichten. Der ungeschnittene Ring 21 kann auch an einem Stützring 24 anliegen. Der ungeschnittene Ring 21 kann dazu in einer Umfangsnut 28 des Kolbenmittelteils 14 bzw. des Kolbenendteils 13 angeordnet werden und ist wiederum radial vom Grund der zugehörigen Umfangsnut 28 beabstandet angeordnet. Die Breite der Umfangsnut 28 ist breiter als die Breite des ungeschnittenen Ringes 21, um eine ungehinderte Querbewegung des Kolbenkörpers 15 zu ermöglichen. Der ungeschnittene Ring 21 liegt axial an einem Stützring 24 an, der ebenfalls in der Umfangsnut 28 ist und vom Grund der Umfangsnut 28 radial beabstandet angeordnet sind. Der Stützring 24 und der ungeschnittene Ring 21 sind in der Umfangsnut 28 wiederum mit einem axialen Spiel eingebaut, damit diese axial nicht eingeklemmt werden.

Am Kolbenkörper 15 ist weiters ein Tragring 4 angeordnet. Dieser und/oder ein weiterer Tragring 4 kann aber auch im am Kolbenmittel 14 bzw. Kolbenendteil 13 oder kurbelraumseitig am Kolbenkörper 15 angeordnet sein.

Mögliche Ausführungen von verwendeten Ringen sind in den Figuren 4 bis 6 dargestellt. Im ungeschnittenen Ring 21 (Fig. 4) können Druckausgleichsbohrungen 30 vorgesehen sein. Der ungeschnittene Ring 21 kann vorteilhaft aus PTFE gefertigt sein, da PTFE-Ringe einen gewissen Verschleiß nachstellen können. Ein in Fig. 5 gezeigter Tragring 4 kann geschnitten ausgeführt sein und kann an der radial äußeren Umfangsfläche axial durchgehende Nuten 29 aufweisen, um den wirkenden Druck zu den Kolbenringen 11 zu leiten, um zu verhindern, dass sich ein Differenzdruck beim Tragring 4 aufbaut. Die in Fig. 6 dargestellte Ausführung eines Kolbenringes 11 entspricht der Beschreibung der AT 505 549 B. Es ist aber auch jede andere Ausführung eines Kolbenringes 11 denkbar.

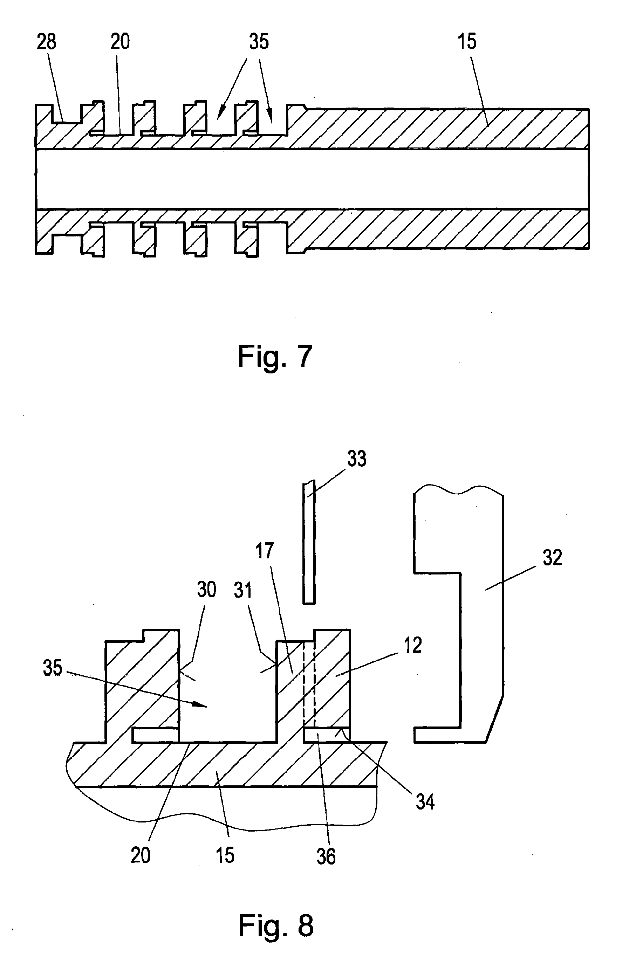

Bei der Fertigung des erfindungsgemäßen Kolbens 1 wird der Kolbenkörper 15 bevorzugt mit allen Abstufungen und umfangsnutförmigen Einschnitten 35 für die spätere Aufnahme der Kolbenringe 11 und Stützringe 12 (zumindest ein Kolbenring 11 und Stützring 12) und eventuell der Mittenbohrung für die spätere Aufnahme des Kolbenmittelteiles 14 aus einem Halbzeug herausgedreht, Fig. 7. Bei diesem Schritt können bereits die äußeren Durchmesser der einzelnen Kolbenteile gefertigt werden. Gleichzeitig können dabei auch allfällige weitere Umfangsnuten bzw. Abstufungen, wie z.B. zur Aufnahme von Tragringen oder anderen Ringen, gefertigt werden. Nach diesen ersten Arbeitsschritten ist der spätere Stützring 12 jedoch noch mit dem Umfangssteg 17 zwischen zwei benachbarten Umfangsnuten 20 verbunden. Nun wird ein axiales Ende des umfangsnutförmigen Einschnittes 35 (der Bereich der später zum Stützring 12 wird) mit einem geeigneten Werkzeug, wie z.B. einer Stechbohrstange 32 oder einem ähnlichen Werkzeug, auf die gewünschte endgültige Breite der Umfangsnut 20 hinterdreht. Die Hinterdrehung 36 erfolgt dabei am selben Radius wie der Grund der Umfangsnut 20. Der spätere Stützring 12 erhält hier damit bereits seinen Abstand zwischen Grund der Umfangsnut 20 und der inneren Umfangsfläche 34 des Stützringes 12. Dabei ist es möglich, die beiden zugwandten axialen Stirnflächen 30, 31 des umfangsnutförmigen Einschnittes 35, an denen im fertigen Kolben der Stützring 12 axial am Kolbenkörper 15 anliegt, zur Ausbildung von Dichtflächen mit den benötigten Toleranzen, wie z.B. Oberflächengüte (z.B. Ra 0.8) und Parallelität, zu fertigen. Das ist insbesondere deshalb vorteilhaft, da der Stützring 12 und der Kolbenkörper 15 aus Metall gefertigt sind und für eine gute Dichtwirkung exakt gefertigte Stirnflächen 30, 31 nötig sind. Anschließend wird zur Ausbildung des Stützringes 12 der hinterdrehte Teil des umfangsnutförmigen Einschnittes 35 mit einem geeigneten Werkzeug, wie z.B. einer Trennscheibe, vom Kolbenkörper 15 getrennt. Der so gebildete Stützring kann sich somit frei in der Umfangsnut 20 bewegen. Es ist aber selbstverständlich auch denkbar, eine Umfangsnut 20 mit Stützring 12 nach der anderen zu fertigen, wobei die dabei eingesetzten Arbeitsschritte die gleichen bleiben.

Auf die vorhin beschriebene Weise ist es möglich, Kolbenkörper 15 und Stützringe 12 aus einem Teil zu fertigen, wodurch die Anzahl der Einzelteile drastisch reduziert wird. Zur Komplettierung des Kolbens 1 sind anschließend nur mehr die Kolbenringe 11 in die Umfangsnuten 20 und gegebenenfalls vorhandene Tragringe 4 in die zugehörigen Umfangsnuten einzusetzen. Dazu sind vorher die Stützringe 12 axial so zu verschieben, dass die beiden Stirnflächen 30, 31 axial aneinander liegend angeordnet sind. Anschließend ist der Kolbenkörper 15 auf den Kolbenmittelteil 14 aufzubringen und gegebenenfalls darauf zu befestigen, z.B. mittels Kolbenendteil 13.

## Patentansprüche

1. Kolben mit einem Kolbenkörper (15) und einer Anzahl von Kolbenringen (11) und Stützringen (12), die auf dem Kolbenkörper (15) axial hintereinanderfolgend angeordnet sind, wobei ein Kolbenring (11) und ein Stützring (12) in einer am Kolbenkörper (15) vorgesehenen Umfangsnut (20) angeordnet sind und sich der Kolbenring (11) am Stützring (12) abstützt, wobei die axiale Breite der Umfangsnut (20) größer ist, als die axiale Gesamtbreite des Stützringes (12) und des Kolbenringes (11) und der Stützring (12) radial innen radial beabstandet vom Kolbenkörper (15) angeordnet ist, **dadurch gekennzeichnet, dass** der Stützring (12) ein ungeschnittener Ring ist, der aus dem Kolbenkörper (15) herausgedreht ist.

2. Kolben nach Anspruch 1, **dadurch gekennzeichnet, dass** am Kolbenkörper (15) zumindest ein Tragring (4) vorgesehen ist.

3. Kolben nach Anspruch 1 oder 2, **dadurch gekennzeichnet, dass** der Kolbenkörper (15) auf einem Kolbenmittelteil (14) angeordnet ist.

4. Kolben nach Anspruch 3, **dadurch gekennzeichnet, dass** an einem axialen Ende des Kolbens (1) ein Kolbenendteil (13) vorgesehen ist, der den Kolbenkörper (15) am Kolbenmittelteil (14) fixiert.

5. Verfahren zur Fertigung eines Kolbenkörpers (15) für einen Kolben (1) mit zumindest einem Stützring (12), der in einer am Kolbenkörper (15) vorgesehenen Umfangsnut (20) angeordnet ist, **gekennzeichnet durch** die folgenden Verfahrensschritte
a) Fertigung des Kolbenkörpers (15) mit einem umfangsnutförmigen Einschnitt (35),
b) Hinterdrehen des umfangsnutförmigen Einschnittes (35) auf die gewünschte Breite der Umfangsnut (20) und
c) Abtrennen des hinterdrehten Teils des umfangsnutförmigen Einschnittes (35) zur Ausbildung des Stützringes (12).

6. Verfahren nach Anspruch 5, **dadurch gekennzeichnet, dass** vor dem Abtrennen des hinterdrehten Teils des umfangsnutförmigen Einschnittes (35) die beiden zugewandten Stirnflächen (30, 31) des umfangsnutförmigen Einschnittes (35) zur Ausbildung von Dichtflächen mit den benötigten Toleranzen gefertigt werden.

7. Verfahren zur Fertigung eines Kolbens (1) mit zumindest einem Kolbenring (11) und einem Stützring (12), die in einer an einem Kolbenkörper (15) vorgesehenen Umfangsnut (20) angeordnet sind, **gekennzeichnet durch** die folgenden Verfahrensschritte
a) Fertigung des Kolbenkörpers (15) mit einem umfangsnutförmigen Einschnitt (35),
b) Hinterdrehen des umfangsnutförmigen Einschnittes (35) auf die gewünschte Breite der Umfangsnut (20),
c) Abtrennen des hinterdrehten Teils des umfangsnutförmigen Einschnittes (35) zur Ausbildung des Stützringes (12) und
d) Einsetzen des Kolbenringes (11) in die Umfangsnut (20).

8. Verfahren nach Anspruch 7, **dadurch gekennzeichnet, dass** vor dem Abtrennen des hinterdrehten Teils des umfangsnutförmigen Einschnittes (35) die beiden zugewandten Stirnflächen (30, 31) des umfangsnutförmigen Einschnittes (35) zur Ausbildung von Dichtflächen mit den benötigten Toleranzen gefertigt werden.

## Claims

1. Piston having a piston body (15) and a number of piston rings (11) and support rings (12) which are arranged axially one behind the other on the piston body (15), wherein a piston ring (11) and a support ring (12) are arranged in a peripheral groove (20) provided on the piston body (15), and the piston ring (11) is supported on the support ring (12), whereas the axial width of the peripheral groove (20) is greater than the total axial width of the support ring (12) and of the piston ring (11), and the support ring (12) is arranged radially inwardly at a distance from the piston body (15), **characterized in that** the support ring (12) is an unbroken ring which is relief-milled from the piston body (15).

2. Piston according to Claim 1, **characterized in that** at least one bearing ring (4) is provided on the piston body (15).

3. Piston according to Claim 1 or 2, **characterized in that** the piston body (15) is arranged on a piston middle part (14).

4. Piston according to Claim 3, **characterized in that** a piston end part (13) is provided at one axial end of the piston (1), and fixes the piston body (15) to the piston middle part (14).

5. Method for manufacturing a piston body (15) for a piston (1) having at least one support ring (12) which is arranged in a peripheral groove (20) provided on the piston body (15), **characterized by** the following method steps:
a) Producing the piston body (15) with a peripheral groove-shaped indentation (35),
b) Relief milling the peripheral groove-shaped indentation (35) to the desired width of the peripheral groove (20), and
c) Separating the relief-milled part of the peripheral groove-shaped indentation (35) to form the support ring (12).

6. Method according to Claim 5, **characterized in that** before the relief-milled part of the peripheral groove-shaped indentation (35) is separated, the two mutually facing end faces (30, 31) of the peripheral groove-shaped indentation (35) are produced for forming sealing surfaces having the necessary tolerances.

7. Method for manufacturing a piston (1) having at least one piston ring (11) and one support ring (12) which are arranged in a peripheral groove (20) provided on the piston body (15), **characterized by** the following method steps:
a) Producing the piston body (15) with a peripheral groove-shaped indentation (35),
b) Relief milling the peripheral groove-shaped indentation (35) to the desired width of the peripheral groove (20),
c) Separating the relief-milled part of the peripheral groove-shaped indentation (35) to form the support ring (12), and
d) Inserting the piston ring (11) into the peripheral groove (20).

8. Method according to Claim 7, **characterized in that** before the relief-milled part of the peripheral groove-shaped indentation (35) is separated, the two mutually facing end faces (30, 31) of the peripheral groove-shaped indentation (35) are produced for forming sealing surfaces having the necessary tolerances.

## Revendications

1. Piston comprenant un corps de piston (15) et un nombre de segments (11) et de bagues d'appui (12) qui sont disposés les uns à la suite des autres dans la direction axiale sur le corps de piston (15), dans lequel un segment (11) et une bague d'appui (12) sont disposés dans une rainure circonférentielle (20) formée sur le corps de piston (15) et le segment (11) s'appuie sur la bague d'appui (12), et dans lequel la largeur axiale de la rainure circonférentielle (20) est plus grande que la somme de la largeur axiale de la bague d'appui (12) et de celle du segment (11), et la bague d'appui (12) est espacée radialement du corps de piston (15), vers l'intérieur, **caractérisé par le fait que** la bague d'appui (12) est une bague non coupée qui est taillée au tour dans le corps de piston (15).

2. Piston selon la revendication 1, **caractérisé par le fait qu'**au moins une bague support (4) est montée sur le corps de piston (15).

3. Piston selon l'une des revendications 1 ou 2, **caractérisé par le fait que** le corps de piston (15) est disposé sur une partie centrale (14) du piston.

4. Piston selon la revendication 3, **caractérisé par le fait qu'**à une extrémité axiale du piston (1), est formée une partie terminale de piston (13) qui fixe le corps de piston (15) à la partie centrale (14) du piston.

5. Procédé de fabrication d'un corps de piston (15) pour un piston (1) comportant au moins une bague d'appui (12) qui est disposée dans une rainure circonférentielle (20) formée sur le corps de piston (15), **caractérisé par** les étapes de procédé suivantes :
a) fabrication du corps de piston (15) comportant une encoche (35) en forme de rainure circonférentielle ;
b) usinage au tour en sous-cavage de l'encoche (35) en forme de rainure circonférentielle jusqu'à atteindre la largeur souhaitée de la rainure circonférentielle (20) ; et
c) découpage de la partie sous-cavée de l'encoche (35) en forme de rainure circonférentielle pour obtenir la bague d'appui (12).

6. Procédé selon la revendication 5, **caractérisé par le fait qu'**avant le découpage de la partie sous-cavée de l'encoche (35) en forme de rainure circonférentielle, les deux faces frontales (30, 31) opposées face à face de l'encoche (35) en forme de rainure circonférentielle pour former des surfaces d'étanchéité présentant les tolérances requises.

7. Procédé de fabrication d'un piston (1) possédant au moins un segment (11) et une bague d'appui (12) qui sont placés dans une rainure circonférentielle (20) pratiquée sur un corps de piston (15), **caractérisé par** les étapes de procédé suivantes
a) fabrication du corps de piston (15) muni d'une encoche (35) en forme de rainure circonférentielle ;
b) usinage au tour en sous-cavage de l'encoche (35) en forme de rainure circonférentielle jusqu'à atteindre la largeur souhaitée de la rainure circonférentielle (20) ;
c) découpage de la partie sous-cavée de l'encoche (35) en forme de rainure circonférentielle pour obtenir la bague d'appui (12) ; et
d) mise en place du segment (11) dans la rainure circonférentielle (20).

8. Procédé selon la revendication 7, **caractérisé par le fait qu'**avant le découpage de la partie sous-cavée de l'encoche (35) en forme de rainure circonférentielle, les deux faces frontales opposées face à face (30, 31) de l'encoche (35) en forme de rainure circonférentielle sont usinées pour former des surfaces d'étanchéité présentant les tolérances requises.
